# EUROPEAN PATENT APPLICATION

(11) **EP 3 112 965 A1**
(43) Date of publication of application: **04.01.2017**
(21) Application number: 15290172.4
(22) Date of filing: 02.07.2015
(51) Int. Cl.: G05B 19/042

(54) **ROBOTIC PROCESS AUTOMATION**

(71) Applicant: Accenture Global Services Limited, Dublin 4 (IE)
(72) Inventor: Bataller, Cyrille, 06250 Mougins (FR); Jacquot, Adrien, 25480 Ecole-Valentin (FR)
(74) Representative: Müller-Boré & Partner Patentanwälte PartG mbB

(57) **Abstract**

A computer system comprising a memory and a processor is provided. The computer system is configured to: acquire information relating to images shown on a display; analyze the information relating to the images to detect activities on the display; record activity information about the detected activities on the display; and generate output data comprising a combination of the information relating to the images and the activity information. Furthermore, a corresponding method and computer program product are provided.

## Description

### Technical Field

The following description relates to a system, a method and a product in the context of robotic process automation (RPA).

### Background

Robotic process automation (RPA) is a technology that enables to automate the execution of repetitive and manually intensive activities. In RPA, a computer system or robot may mimic the actions of a human being in order to perform a computer-based task. In other words, RPA can be used to interact with application software (or application, for short) through its user interface, as a human being would do. Therefore it is not necessary to integrate RPA with the existing applications at a programming level, thereby eliminating the difficulties inherent to integration, namely bringing together diverse components.

An example of an RPA software is Blue Prism. Blue Prism provides a plurality of connectors, i.e. libraries for communicating with a particular kind of application user interface. For instance, Blue Prism provides an HTML connector, which allows working with HTML, JavaScript and other common components of a browser interface. Blue Prism may retrieve the source code of a web page and use it e.g. to identify and recognize different components of the web page such as the search button. Blue Prism comprises several modules, each one being specific to an application user interface.

There is therefore a need for universal RPA, namely RPA in which a robot is capable of interacting with a variety of user interfaces without the need for application-specific modules. Particularly, there is a need for RPA being environment independent, capable of an automation of the execution of operations and/or commands independently of the technical operation of a program and/or program module, for instance when using a remote desktop connection technology that sends an image stream without knowledge of the underlying applications.

### Summary

According to one aspect, a computer system is provided. The computer system may comprise a memory and a processor configured to:
acquire information relating to images (such as screenshots) or a stream of images shown on a display;
analyze the information relating to the images or the stream of images to detect activities on the display;
record activity information about the detected activities on the display; and
generate output data comprising a combination of the information relating to the images or the stream of images and the activity information.

This aspect of the invention is directed to recording a procedure as executed by a user, in the context of RPA. The user may exemplarily perform a task by interacting with the user interface of an application. The user interface may be shown on a display of a computer screen and the processor may acquire information relating what is shown on the display. What is shown on the display may be monitored in the form of images which are distinct, single entities, or in the form of a stream of images, as in a sequence of combined images or a video stream. In the following, the term "images" may be used to refer both to the single images and to one or more of the images in the stream of the images.

The display of the computer screen may, in one example, be comprised in or form part of the computer system configured to carry out the information acquisition. In another example, the display may be part of a different computer system which is accessed e.g. via a remote desktop connection technology and/or by means of a virtual machine (which may be running on the same computer system or a different computer system).

The images may depict exemplarily the user interface and additional elements representing the interaction of the user with the user interface. The acquisition of the information relating to the images may be achieved by directly capturing the images as they appear on the display (e.g. take screenshots) and/or by collecting information about the images on the display from sources other than the display.

When capturing images, information may be particularly acquired by computer vision, e.g. tracking mouse movements, mouse pointer turning to character prompt blinking in text field, and/or characters appearing on the screen, or buttons showing visual alteration when pressed.

The capturing of the images may be performed in a (at least partly) continuous manner or only at particular moments during the execution of the task. For example, the acquisition may take place at regular intervals of time and/or subsequent to a trigger event. In particular, images may be acquired every time an activity on the display is detected, e.g. the user performing an action, such as clicking on a button of the user interface, or an application doing something, for instance a browser loading a web page or a dialog box popping up. In one example, the capturing of the images is performed internally, i.e. by a stream of images to the display (e.g. accessing the feed of output images from the graphics card to the display). In another example, the capturing may be conducted by an external image acquisition device, such as a camera focused on the display.

Additionally or alternatively, the processor may be configured to gather information about the images on the display from other sources. For example, the additional elements shown in the images may comprise a pointer of a pointing device (e.g. a mouse). The processor may acquire information on an additional element such as the pointer from e.g. the drivers controlling the peripheral input devices, including the pointing device, or from the underlying operating system. For example, the acquired information may comprise a location of the pointer and/or an action performed by the pointer, such as selecting an area of the image shown on the display.

The different steps of the procedure may correspond to different activities displayed on the computer screen. For example, the beginning of the procedure may coincide with the launching of an application, which implies a new running process. Other applications may run at the same time and/or following the first one, each constituting a process. Therefore a process change may occur when launching a new application or switching from one application to another. In another example, the procedure may comprise a user input to the user interface e.g. by means of a peripheral input device such as a keyboard or a mouse. The user input may, thus, comprise typing, i.e. inputting text by pressing keys on the keyboard, or using a pointer of a pointing device (e.g. a mouse) for performing actions such as clicking, dragging and/or scrolling. In yet another example, interacting with the user interface may provoke a scene change, i.e. a change in the images shown on the display, e.g. when clicking on a link in a web page to access another web page. A scene change may also be referred to as a screen change.

The acquired information relating to the images may be analyzed to detect activities on the display. For example, the information captured in the form of screenshots may by analyzed to determine whether a scene change has occurred, i.e. whether there is a change between two subsequent screenshots. This analysis may be performed by means of computer vision techniques. Computer vision refers to a field of technology concerned with the analysis and interpretation of visual information by a computer. In particular, computer vision may duplicate the abilities of human vision by electronically perceiving and understanding an image. The use of computer vision may, thus, allow to analyze the information relating to the images to detect activities on the display.

Additionally or alternatively, the information about the images on the display obtained by sources other than the display may be analyzed to detect activities on the display. If, for example, this information comprises indication of an action performed e.g. by a mouse pointer, the occurrence of an activity of the "user input" type may be detected.

The collected information may be recorded by the processor. For example, the information relative to the activities, or activity information, and the information relating to the images may be stored in a log file in the memory.

Once the activity information has been recorded, the processor may be configured to generate output data comprising a combination of the information relating to the images and the activity information. According to one example, a screenshot may be superimposed with or enclose the activity information in a human-readable format (e.g. natural text language). For instance, a screenshot showing the mouse pointer on a button may be modified to contain also a written instruction describing the step performed at the moment in which the screenshot was taken, such as "Left Click" to indicate a click with the left key of the mouse. According to another example, a set of computer instructions to reproduce the activity in an automated fashion may be superimposed on or enclosed with a screenshot.

According to an embodiment of the invention, the processor may be further configured to:
read the output data; and
reproduce the activities on the display on the basis of the output data.

A second aspect of the invention is directed to automatically executing a procedure for performing a task. After observing the user's actions, the computer system may reproduce them. The output data comprise a combination of the information relating to the images and the activity information and may be read by the processor as a set of instructions. Again, the computer vision may be employed to interpret the output data.

According to one example, the processor is further configured to use the output data for image matching. An image may characterize a specific area of the display. The processor may take a screenshot of the display and search through the screenshot for a match with the image. For example, the image may be of a button that should be clicked on according to the output data. The image matching may allow to identify the position of the button on the display and, subsequently, the processor may reproduce e.g. the activity of clicking.

According to a further example, the processor is further configured to use optical character recognition (OCR) to retrieve information from the acquired images in the output data. The recorded information may be superimposed as written text on the acquired images and the OCR may convert the image of the typewritten text into machine-encoded text. Coming back to the above example, the processor may interpret a recorded piece of information such as "Left Click" and reproduce the activity of clicking with the left key of the mouse.

According to another aspect of the invention, a computer-implemented method is provided. The method may comprise:
acquiring information relating to images or a stream of images shown on a display;
analyzing the information relating to the images or the stream of images to detect activities on the display;
recording activity information about the detected activities on the display; and
generating output data comprising a combination of the information relating to the images or the stream of images and the activity information.

According to a further aspect of the invention, a computer program product is provided. The product may comprise computer-readable instructions which, when loaded and executed on a suitable system, perform the steps of a method according to the previous aspect.

Accordingly, RPA in the present description particularly comprises two aspects: the training of the computer system or robot that has to perform a given task and the subsequent automatized execution of the task by the robot. The robot needs to be shown how a human being or user would perform the task. The procedure followed by the human being when executing the task must be recorded and rendered in a form that allows the robot to replicate the actions made by the user. According to the present description, computer vision is employed both when recording a procedure and when executing it. In contrast with existing RPA solutions, which rely on specific technologies or protocol (e.g. HTML) to interpret the user's actions, the present description leverages computer vision to construe the operations performed by the user. In other words, thanks to the computer vision techniques, the robot does not need to understand the user's action in the context of the specific technology of or protocol implemented by the user interface. The robot is instead capable of directly reproducing the user's actions by way of visual "over the shoulder" observation and imitation or replication of the detected action(s). RPA according to the present invention may be defined cognitive RPA, meaning that a computer system is capable of sensing, comprehending and acting. Cognitive RPA is also flexible and adaptive to variations in the procedure, as explained in more detail below.

### Brief Description of the Drawings

Figure 1 shows an example of an architecture for RPA according to the present invention.
Figure 2 shows a conceptual representation of the role of a monitoring agent.
Figure 3 shows an example of operations performed by a monitoring agent.
Figures 4 and 5 show two examples of operations performed by an executing agent.
Figure 6 shows another example of an architecture for RPA.
Figure 7 shows an exemplary system for implementing the invention including a general purpose computing device.

### Detailed Description

In the following text, a detailed description of examples will be given with reference to the drawings. It should be understood that various modifications to the examples may be made. Unless explicitly indicated otherwise, elements of one example may be combined and used in other examples to form new examples.

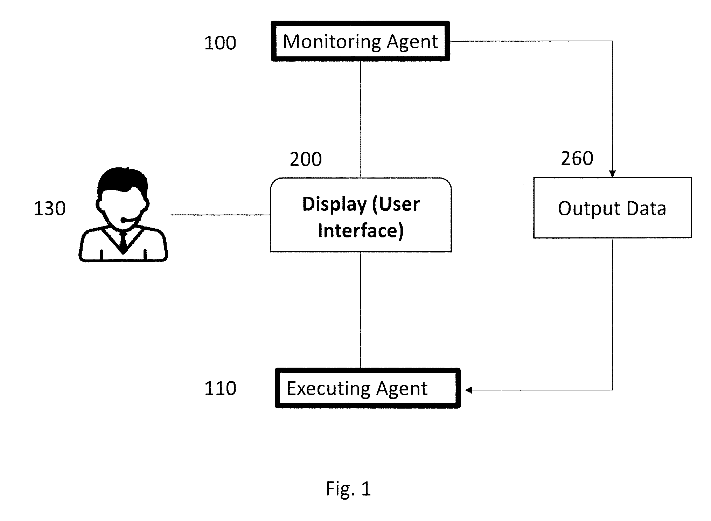

Figure 1 shows an example of an architecture for RPA according to the present invention. The RPA computer system may comprise a monitoring agent 100, an executing agent 110, a display 200, a memory and a processor (not shown). In an example, the monitoring agent 100 and the executing agent 110 may be two different entities. In another example, the monitoring agent 100 and the executing agent 110 may coincide.

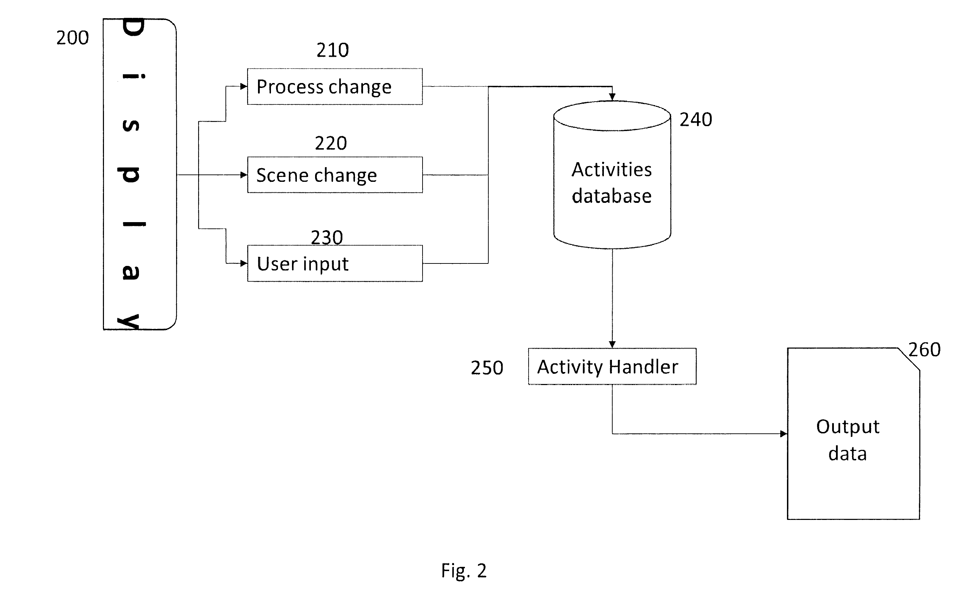

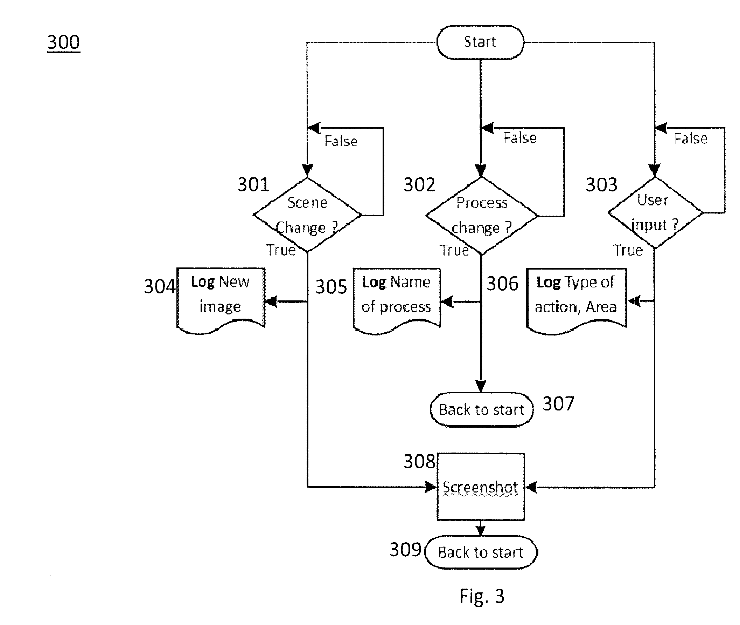

The monitoring agent 100 may be configured to acquire information relating to images and/or a stream of images shown on the display 200, while a user 130 is performing operations in the computer system, wherein the computing operations have a direct counterpart on the display 200. It should be understood that the information acquired from the display may be based on images which are distinct, single entities, or on a (continuous or discrete) stream of images, such as in a sequence of combined images or a video stream. In the following, the term "images" may be used to refer both to the single images and to one or more of the images in the stream of the images. The monitoring agent 100 may analyze the information relating to the images to detect activities on the display 200, as explained with reference to Figures 2 and 3 below. The monitoring agent may then record activity information about the detected activities on the display 200 and generate output data 260 comprising a combination of the information relating to the images and the activity information.

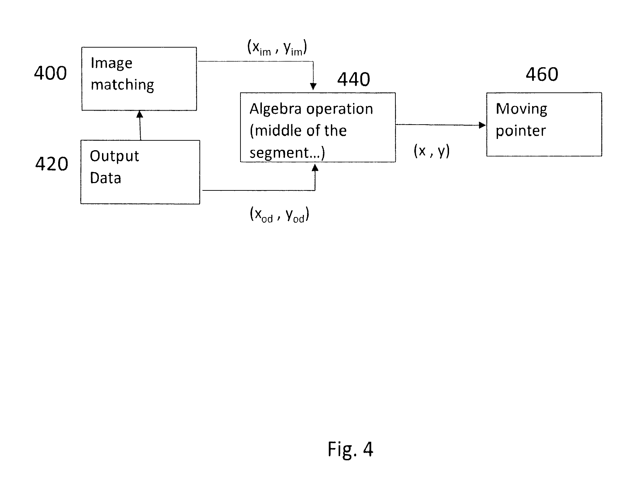

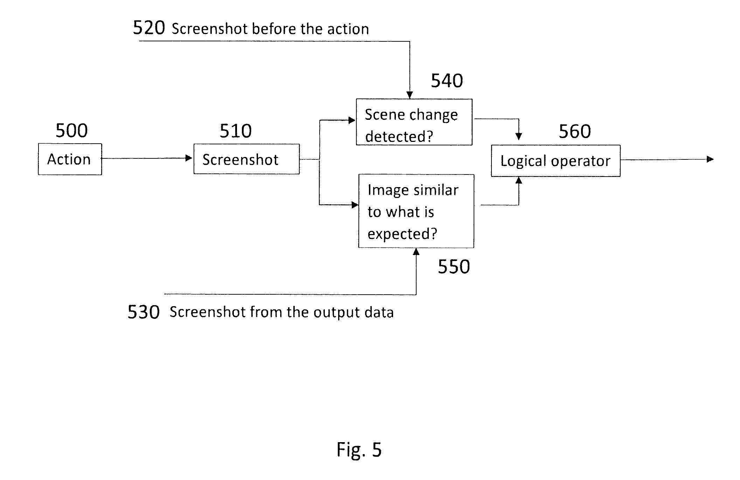

The output data 260 may be used by the executing agent 110 when the executing agent 110 interfaces with the display 200 to autonomously and automatically repeat the operations previously performed by the user 130. In other words, the executing agent 110 may read the output data 260 and, on the basis of the output data 260, reproduce the activities on the display 200 that correspond to the steps necessary to complete a task. Two examples of how the executing agent 110 reproduces the activities are given below with reference to Figures 4 and 5.

The functions of the monitoring agent 100 of Figure 1 will be explained in detail with reference to Figures 2 and 3. The monitoring agent 100 may monitor a display 200 of a computer on which a user is performing a task, for example sending an email. Particularly, the monitoring agent 100 may acquire information about the images by capturing the images being sent to the display 200 e.g. from a stream of images sent thereto and/or in the form of screen shots. Alternatively or additionally, the monitoring agent 100 may capture the images shown on the display 200 by a camera (such as a CCD camera) recording the images displayed on the display 200. Specifically, the display 200 may show the steps performed e.g. by a user sitting in front of the display 200 to carry out the task e.g. by operating a pointing device (such as a mouse) and/or inputting commands and/or information via an input device such as a keyboard, a gesture recognition device, a touchpad, a scanner, an eye tracker or the like. Particularly, the camera may be part of or included in smart glasses (such as Google glasses). For instance, when an email is sent, one or more of the following activities may be triggered or input e.g. by a user and, thus, displayed or shown on the display 200:
a) Selection, by a pointer, of the icon of an email application;
b) Launch of a new process on the display 200, specifically generating a modification and/or generation of a graphical user interface (GUI) of the email application (e.g. a window);
c) Selection or clicking, by a pointer, of the a control element such as a button (e.g. "New Email" button);
d) Manifestation of a new scene on the display, namely the GUI for a new email (e.g. a window);
e) Selection or activation, by a pointer, of an input field in the GUI (e.g. an input field "To");
f) Inputting or appearance of text designating a recipient in the selected field;
g) Selection or activation, by a pointer, of a further input field (such as an input field "Subject");
h) Inputting or appearance of text designating a subject in the selected further input field;
i) Selection or activation, by a pointer, of another input field (such as an input field "Body");
j) Inputting or appearance of text conveying a message in the selected another input field;
k) Selection or clicking, by a pointer, of a control element terminating an interaction of the user with the GUI such as selecting a button "Send".

The above activities maybe identified by the monitoring agent 100 in virtue of the captured images and/or of information obtained by other sources, as previously illustrated. The above activities may be classified by the monitoring agent 100 into three main groups: process change 210, scene change 220 (also referred to as screen change) and user input 230. A process change 210 may refer to a new instance of an application being executed. Another at least one process may have been running prior to the process change or the computer may have been idle. Ba a chance of the image displayed on the monitor 200, the monitoring agent 100 can determine that a process chance 210 has been triggered e.g. by a user. Particularly, a new process may be launched by clicking on an icon shown on the display 200 e.g. relating to an email messaging application (e.g. Outlook). A scene change 220 may refer to the modification of the scene shown on the display 200, wherein the scene is given by the ensemble of the images shown on the display (e.g. windows, desktop background...). An exemplary scene change may be e.g. the opening or generation on the display 200 of a new window relating to an application being newly started. A user input 230 may be given via a peripheral input device such as a keyboard, touchpad or a mouse. The user input 230 may, thus, comprise typing, i.e. inputting text by pressing keys on a keyboard, or using a pointer of a pointing device (e.g. a mouse) for performing actions such as clicking, dragging and/or scrolling.

Activity b) above may be considered a process change 210. Activity d) may be considered a scene change 220. Activities a), c) and e) to k) may be considered user inputs 230. In particular, the activity of selection may correspond to a left click of the user on a mouse and the appearance of text may correspond to typing of the user on a keyboard.

The operations 300 carried out by the monitoring agent 100 may, thus, comprise checking for the occurrence of any activity on the display 200, in order to extract information relating to performing a task and document the procedure necessary for performing a task. The monitoring agent 100 may monitor the display and look for instances of scene change 301, process change 302 and/or user input 303.

When an activity takes place (i.e. instances of scene change 301, process change 302 and/or user input 303 are detected by the monitoring agent 100), the monitoring agent 100 particularly causes information about the activity to be recorded or stored in an activities database 240.

If a scene change 220 occurs, the monitoring agent 100 may log 304 the new image and attempt to identify it. The occurrence of the scene change 220 may be detected by the monitoring agent 100 for small modifications (e.g. a pop-up window and/or a message/icon appears) or more consistent modification (e.g. a complete change of the whole image shown on the display 200).

For example, the initial image shown on the display 200 may be a dark screen (e.g. a desktop background), and the scene change may be due to the launching of the email application, which has a light GUI, e.g. a window where a bright color (e.g. white) is a predominant color. The average intensity of the pixels in the two images (before and after the scene change) may be computed and the difference between the intensities may be an indicator of the scene change. If the difference is higher than a specified (predetermined or predeterminable) threshold, the monitoring agent 100 may identify a scene change and log the new image and/or cause information about the detected activity to be recorded or stored in an activities database 240.

If a process change 210 occurs, the monitoring agent 100 may determine and log 305 the name of the process. The name of the process may be determined by the monitoring agent 100 by querying the processes operated on the computer.

Accordingly, the monitoring agent 100 may retrieve the name of the process by accessing e.g. a task manager particularly being a system monitor program providing information about the process(es) and/or program(s) running on a computer and/or the general status of the computer.

Alternatively or additionally, the monitoring agent 100 particularly may retrieve the name of the process via computer vision, for example by using OCR on an acquired image showing the GUI of the application running the process, wherein the GUI bears the name of the process e.g. in the title bar. In another example, the name of the process may be inferred by recognizing the general appearance of the GUI, e.g. using image matching as explained in more detail below. Computer vision particularly is a field that includes methods for acquiring, processing, analyzing, and/or understanding or interpreting images and, in general, high-dimensional data from the real world in order to produce numerical or symbolic information thereof, e.g., in the form of one or more decisions. In this context, computer vision may duplicate the abilities of human vision by electronically perceiving and understanding an image, wherein for achieving the image understanding a disentangling of symbolic information from image data using models constructed may be done by means of geometry, physics, statistics, and/or learning theory.

If a new process is being executed, the monitoring agent 100 may go back 307 to the start of the operations 300 and check (or continue monitoring) for other or further activities.

If a user input 230 is given, the monitoring agent 100 may detect it on the display 200 and log 306 the type of action occurred (e.g. executed by the user) and the area of the display 200 where the action has occurred or been performed. This information particularly may be obtained via computer vision and/or from external sources. For example, in the email example, the location on the display 200 where the action is performed may be identified (particularly via computer vision), by recognizing e.g. the pointer hovering on the button "Send". The information about the type of action, i.e. the left click, may be obtained directly from the mouse driver. In another example, also the location of the pointer may be retrieved directly from the mouse driver.

When a scene change 220 or a user input 230 are detected, the monitoring agent 100 may take 308 a screenshot of (at least a part of) the display 200. The screenshot(s) may be stored in the activities database 240 along with the recorded activity information.

An activity handler 250 of the monitoring agent 100 may access the activities database 240 and combine the recorded activity information with screenshots concerning that specific activity. In one example, text (particularly a natural language text) conveying partially or completely the recorded activity information may be superimposed on and/or placed adjacent to (e.g. enclosed to) the screenshots. The output data 260 given by the combination of the information relating to the images (e.g. in the form of screenshots) and the recorded activity information may be presented in the form of an output document, such as a Word document particularly including the screen shot(s) and the recorded information (e.g. the natural language text) in the same document. Accordingly, any activities detected by the monitoring agent 100 on the display 200 are recorded and collated into the output data for subsequent usage by a computer and/or user.

The monitoring agent 100, therefore, enables to automatically and seamlessly collect information on different processes. The monitoring agent 100 may monitor processes on a computer without interfering with the normal functioning. Furthermore, by running on different machines, the documentation operations carried out by the monitoring agent 100 can also enable to detect process anomalies or discrepancies between users, and make sure the final documentation created illustrates the optimal way of executing a process. Moreover, the monitoring agent 100 is independent of the actual environment operating on the computer and an interference therewith, which potentially may lead to a disruption (e.g. crash) of a computer operation is avoided. Furthermore, the output data 260 can be generated by the monitoring agent 100 independently of specific protocols (e.g. HTML) and or technical processes (e.g. computer applications) running on the computer.

The output data provided by the monitoring agent 100 may be used by the executing agent 110 to at least partly automatically carry out a task. A task may comprise a series of operations. Figures 4 and 5 show two examples of operations performed by the executing agent 110.

In the example of Figures 4 and 5, the operations to be performed are moving a pointer and selecting a button to mimic the actions of a user moving a mouse and clicking on a button. Figure 4 shows how the first operation, i.e. moving a pointer, may be carried out.

The output data 420 may comprise the location of the pointer, the type of action performed (e.g. left click) and a screenshot of the display, showing the pattern of the button actioned (i.e. its visual characteristics) and the background. The executing agent 110 may, thus, use the coordinates (x_{od}, y_{od}) provided by the output data 420 in order to correctly move the pointer. However, the coordinates (x_{od}, y_{od}) may be relative coordinates, depending e.g. on the display resolution and/or whether the window constituting the GUI of the currently running application is maximized or not. For example, depending on a specific computer setting and/or display setting, a window may have a different size and/or location on the display 200. Therefore, the executing agent 110 may perform a double check and use part of the output data 420, e.g. the pattern of the button actioned (also called template), for image matching 400. For example, the executing agent 110 may take a screenshot of what is currently displayed and try to find where the template is most likely located in the screenshot. One possible technique is to slide (or gradually displace) the template through the screenshot, wherein sliding means moving the template a specified pixel amount (e.g. one pixel) at a time (left to right, up to down). At each location of the source image, i.e. the screenshot, a metric is calculated so it represents how "good" or "bad" the match at that location is (or how similar the template is to that particular area of the source image).

The image matching 400 may yield a second set of coordinates (xᵢₘ, yᵢₘ) indicating a likely location of the button to be clicked. The executing agent 110 may perform some algebraic operations 440 to combine the information from the output data 420 and from the image matching 400 in order to obtain the most reliable indication (x,y) on where to move the pointer. For example, the executing agent 110 may choose (x,y) as the middle of the segment joining the two points (x_{od}, y_{od}) and (xᵢₘ, yᵢₘ). Once the location (x,y) to where the pointer has to be moved is determined, the executing agent 110 may finally proceed to move the pointer 460.

Figure 5 shows how an operation entailing a scene change 220, such as the second operation (i.e. selecting a button), may be carried out.

Before moving on to other steps of the procedure, some checks may be implemented to ensure that the execution is proceeding correctly. A first screenshot 520 may be taken before the action 500 is made. The action 500 may be performed by the executing agent 110 according to the information in the output data (e.g. left click). A second screenshot 510 may be taken after the action has been performed. If a scene change 220 was recorded in the output data, a first check 540 may be to compare the first pre-action screenshot 520 and the second post-action screenshot 510 and see if a scene change has actually occurred. A second check 550 may consist in comparing the second post-action screenshot 510 with a screenshot 530 present in the output data, depicting how the display should look after performing the action 500. Only one of the two checks 540 and 550 may be implemented. A logical operator 560 may be used to combine the results of the two checks. For example, if both checks are required, an AND operator may be used. If only one check is considered sufficient, an OR operator may be used.

The use of screenshots and/or particularly of computer vision by the executing agent 110 makes the automatization of a procedure adaptive to possible variations, such as a change in the window size as mentioned above. Furthermore, the executing agent 110 is capable to perform a task also when remote desktop operations need to be performed, since it relies on the images on the display.

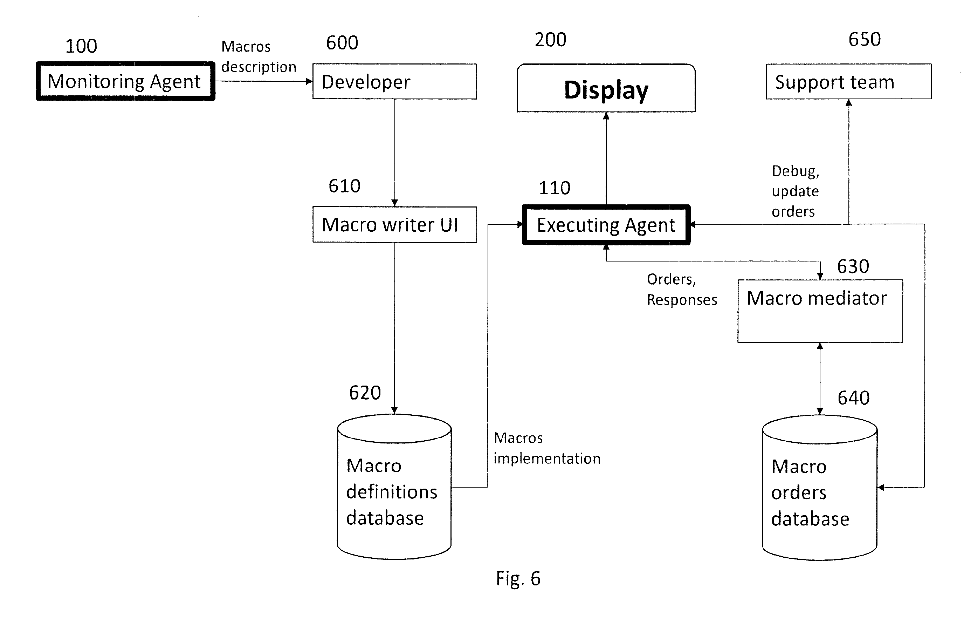

Figure 6 shows another example of an architecture for RPA. In this example, the monitoring agent 100 may provide output data 260 in the form of description for macros. A macro may be a set of rules that specifies how a certain input sequence should be mapped to a replacement output sequence according to a defined procedure. In this context, the macros may contain instructions on how the sequence of operations performed by a user may be mapped to a sequence of operations performed by a robot. The description for the macros may be inspected by a developer 600, which may be a human being or a computer, e.g. in order to choose an optimized description(s) for the macro among a plurality of descriptions that are the results of the monitoring agent 100 monitoring different machines and/or users. For example, different descriptions may be inspected for similarities using technologies such as machine learning to recognize and group similar procedures into a categorization system. Once a selection has been made, the description may be transformed, via a macro writer user interface 610, into actual macro definitions, e.g. given in a scripting language. The macro definitions may be stored in a macro definitions database 620. The executing agent 110 may then receive the macro definitions from the macro definitions database 620 in order to implement the macros on display 200.

Additionally, the executing agent 110 may interact with a macro orders database 640 storing macro orders. Macro orders may be additional set of rules built from the macro definitions deriving from the monitoring agent 100. The executing agent 110 may interact with the macro orders database 640 directly or through a macro mediator 630, which may be an interface between the two. The macro orders database 640 may also be accessed by a support team 650, which may provide debugging and/or updating functionalities.

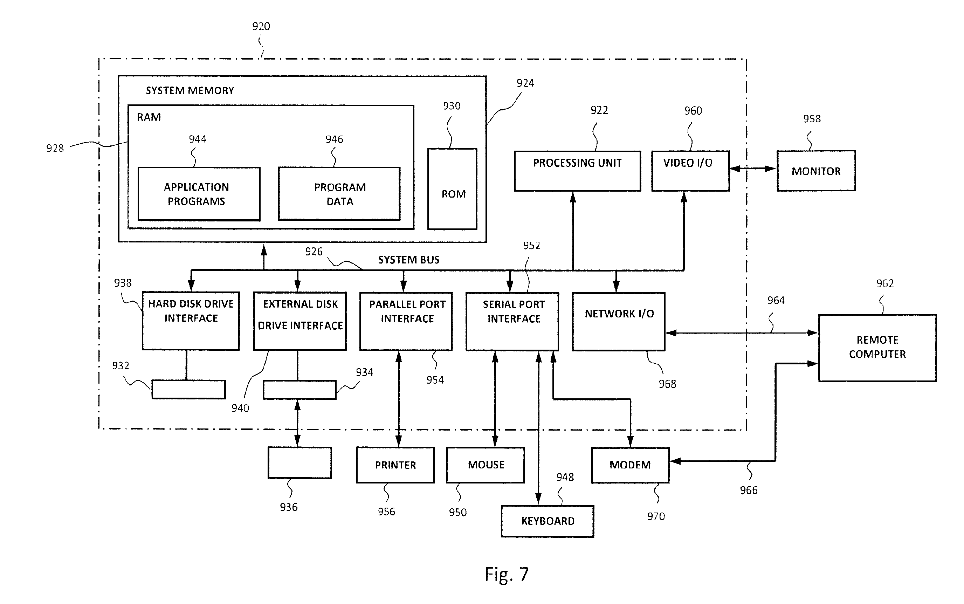

Figure 7 shows an exemplary system for implementing the invention including a general purpose computing device in the form of a conventional computing environment 920 (e.g. a personal computer). The conventional computing environment includes a processing unit 922, a system memory 924, and a system bus 926. The system bus couples various system components including the system memory 924 to the processing unit 922. The processing unit 922 may perform arithmetic, logic and/or control operations by accessing the system memory 924. The system memory 924 may store information and/or instructions for use in combination with the processing unit 922. The system memory 924 may include volatile and non-volatile memory, such as a random access memory (RAM) 928 and a read only memory (ROM) 930. A basic input/output system (BIOS) containing the basic routines that helps to transfer information between elements within the personal computer 920, such as during start-up, may be stored in the ROM 930. The system bus 926 may be any of several types of bus structures including a memory bus or memory controller, a peripheral bus, and a local bus using any of a variety of bus architectures.

The personal computer 920 may further include a hard disk drive 932 for reading from and writing to a hard disk (not shown), and an external disk drive 934 for reading from or writing to a removable disk 936. The removable disk may be a magnetic disk for a magnetic disk driver or an optical disk such as a CD ROM for an optical disk drive. The hard disk drive 932 and the external disk drive 934 are connected to the system bus 926 by a hard disk drive interface 938 and an external disk drive interface 940, respectively. The drives and their associated computer-readable media provide nonvolatile storage of computer readable instructions, data structures, program modules and other data for the personal computer 920. The data structures may include relevant data for the implementation of the method as described above. The relevant data may be organized in a database, for example a relational database management system or a object-oriented database management system.

Although the exemplary environment described herein employs a hard disk (not shown) and an external disk 936, it should be appreciated by those skilled in the art that other types of computer readable media which can store data that is accessible by a computer, such as magnetic cassettes, flash memory cards, digital video disks, random access memories, read only memories, and the like, may also be used in the exemplary operating environment.

A number of program modules may be stored on the hard disk, external disk 936, ROM 930 or RAM 928, including an operating system (not shown), one or more application programs 944, other program modules (not shown), and program data 946. The application programs may include at least a part of the functionality as depicted in figures 2 to 6.

A user may enter commands and information, as discussed below, into the personal computer 920 through input devices such as keyboard 948 and mouse 950. Other input devices (not shown) may include a microphone (or other sensors), joystick, game pad, scanner, or the like. These and other input devices may be connected to the processing unit 922 through a serial port interface 952 that is coupled to the system bus 926, or may be collected by other interfaces, such as a parallel port interface 954, game port or a universal serial bus (USB). Further, information may be printed using printer 956. The printer 956, and other parallel input/output devices may be connected to the processing unit 922 through parallel port interface 954. A monitor 958 or other type of display device is also connected to the system bus 926 via an interface, such as a video input/output 960. In addition to the monitor, computing environment 920 may include other peripheral output devices (not shown), such as speakers or other audible output.

The computing environment 920 may communicate with other electronic devices such as a computer, telephone (wired or wireless), personal digital assistant, television, or the like. To communicate, the computer environment 920 may operate in a networked environment using connections to one or more electronic devices. Figure 9 depicts the computer environment networked with remote computer 962. The remote computer 962 may be another computing environment such as a server, a router, a network PC, a peer device or other common network node, and may include many or all of the elements described above relative to the computing environment 920. The logical connections depicted in figure 9 include a local area network (LAN) 964 and a wide area network (WAN) 966. Such networking environments are commonplace in offices, enterprise-wide computer networks, intranets and the Internet and may particularly be encrypted.

When used in a LAN networking environment, the computing environment 920 may be connected to the LAN 964 through a network I/O 968. When used in a WAN networking environment, the computing environment 920 may include a modem 970 or other means for establishing communications over the WAN 966. The modem 970, which may be internal or external to computing environment 920, is connected to the system bus 926 via the serial port interface 952. In a networked environment, program modules depicted relative to the computing environment 920, or portions thereof, may be stored in a remote memory storage device resident on or accessible to remote computer 962. Furthermore other data relevant to the method for optimization of evaluation of a policy (described above) may be resident on or accessible via the remote computer 962. It will be appreciated that the network connections shown are exemplary and other means of establishing a communications link between the electronic devices may be used.

The above-described computing system is only one example of the type of computing system that may be used to implement the above method for RPA.

## Claims

1. A computer system comprising a memory and a processor configured to:
acquire information relating to images or a stream of images shown on a display (200);
analyze the information relating to the images or the stream of images to detect activities on the display (200);
record activity information about the detected activities on the display (200); and
generate output data (260) comprising a combination of the information relating to the images or the stream of images and the activity information.

2. The computer system according to claim 1, wherein the output data (260) is generated such that the combination of the information relating to the images or the stream of images and the activity information comprises at least one image or a sequence of images with superimposed and/or enclosed activity information in a human-readable format, particularly including natural text language.

3. The computer system according to any one of the preceding claims further comprising the display (200).

4. The computer system according to any one of the preceding claims, wherein the activities on the display (200) comprise at least one of the following:
a process change (210);
a scene change (220); and
a user input (230), wherein the user input (230) particularly comprises at least one of typing and using a pointer of a pointing device to perform actions.

5. The computer system according to any of the preceding claims, wherein the processor is further configured to:
read the output data (260); and
reproduce the activities on the display (200) on the basis of the output data (260).

6. The computer system according to claim 5, wherein the processor is further configured to use the output data (260) for image matching.

7. The computer system according to claims 5 or 6, wherein the processor is further configured to use optical character recognition to retrieve information from the output data (260).

8. A computer-implemented method comprising:
acquiring information relating to images or a stream of images shown on a display (200);
analyzing the information relating to the images or the stream of images to detect activities on the display (200);
recording activity information about the detected activities on the display (200); and
generating output data (260) comprising a combination of the information relating to the images or the stream of images and the activity information.

9. The computer-implemented method according to claim 8, wherein in the step of generating the output data (260) the combination of the information relating to the images or the stream of images and the activity information comprises at least one image or a sequence of images with superimposed and/or enclosed activity information in a human-readable format.

10. The computer-implemented method according to claim 9, wherein the human-readable format includes natural text language.

11. The computer-implemented method according to any of the preceding claims, wherein the activities on the display (200) comprise at least one of the following:
a process change (210);
a scene change (220); and
a user input (230), wherein the user input (230) particularly comprises at least one of typing and using a pointer of a pointing device to perform actions.

12. The computer-implemented method according to any of the preceding claims further comprising:
reading the output data (260); and
reproducing the activities on the display (200) on the basis of the output data (260).

13. The computer-implemented method according to claim 12 further comprising using the output data (260) for image matching.

14. The computer-implemented method according to claims 12 or 13 further comprising using optical character recognition to retrieve information from the output data (260).

15. A computer program product comprising computer-readable instructions which, when loaded and executed on a suitable system, perform the steps of a method according to any one of claims 8 to 14.
